# EUROPÄISCHE PATENTSCHRIFT

(11) **EP 3 625 484 B1**
(45) Veröffentlichungstag und Bekanntmachung des Hinweises auf die Patenterteilung: **19.01.2022**
(21) Anmeldenummer: 18726771.1
(22) Anmeldetag: 18.05.2018
(51) Int. Cl.: F16J 15/16, F16J 15/3228, F16J 15/3244, F16J 15/3208, F16J 15/3236, F16J 15/34

(54) **ROTATIONSDICHTUNGSANORDNUNG UND ROTATIONSDICHTUNG MIT RÜCKFÖRDERFUNKTION**
ROTARY SEAL ARRANGEMENT AND ROTARY SEAL WITH RETURN FUNCTION
ARRANGEMENT DE GARNITURE D'ÉTANCHÉITÉ ROTATIVE ET GARNITURE D'ÉTANCHÉITÉ ROTATIVE AVEC FONCTION DE REFOULEMENT

(30) Priorität: 19.05.2017 DE 102017208574
(43) Veröffentlichungstag der Anmeldung: 25.03.2020
(73) Patentinhaber: Trelleborg Sealing Solutions Germany GmbH, 70565 Stuttgart (DE)
(72) Erfinder: WEHMANN, Christoph, Dr., 70199 Stuttgart (DE); FRANZ, Martin, 72827 Wannweil (DE)
(74) Vertreter: Kohler Schmid Möbus Patentanwälte
(86) Internationale Anmeldenummer: PCT/EP2018/063092
(87) Internationale Veröffentlichungsnummer: WO 2018/211073

(56) Entgegenhaltungen:
- EP-A1- 0 130 237
- EP-A1- 1 197 690
- EP-A1- 1 591 698
- EP-A1- 3 555 503
- GB-A- 1 196 525
- JP-A- H10 122 376
- JP-A- H11 351 405

## Beschreibung

Die Erfindung betrifft eine Rotationsdichtungsanordnung sowie eine Rotationsdichtung mit Rückförderfunktion. Die Rotationsdichtungsanordnung umfasst ein erstes und ein zweites Maschinenelement, die unter Ausbildung eines Dichtspalts voneinander beabstandet und um eine Rotationsachse relativ zueinander bewegbar angeordnet sind. Das erste Maschinenelement weist eine Dichtungshaltestruktur und das zweite Maschinenelement weist eine Dichtfläche auf. Zum Abdichten einer mit einem Fluid druckbeaufschlagbaren Hochdruckseite H des Dichtspalts gegenüber einer Niederdruckseite N des Dichtspalts dient eine Rotationsdichtung. Die Rotationsdichtung ist an der Dichtungshaltestruktur des ersten Maschinenelements gehalten angeordnet und weist eine Dichtlippe auf, die mit ihrer der Dichtfläche zuweisenden Vorderseite an der Dichtfläche des zweiten Maschinenelements dynamisch dichtend anliegt. Die Dichtlippe erstreckt sich also zumindest abschnittsweise parallel oder im Wesentlichen parallel zur Dichtfläche.

Derartige Rotationsdichtungen stellen als dynamische Dichtsysteme wesentliche Konstruktionselemente im Maschinenbau sowie im Fahrzeugbau dar. Die Rotationsdichtungen werden in der Praxis als Radial- oder Axialwellendichtringe eingesetzt. Die Rotationsdichtungen sind in der Praxis nicht zuletzt aufgrund der technischen Weiterentwicklung der Aggregate immer weiter steigenden Betriebsdrücken, Temperaturen und Gleitgeschwindigkeiten ausgesetzt. Das Versagen der Rotationsdichtungen führt dabei zu einer unerwünschten Leckage des abzudichtenden Fluids, was insbesondere bei kritischen Anwendungen verheerende Folgen haben kann. Die Rotationsdichtungselemente müssen mithin immer höheren Anforderungen an deren Dichtvermögen gerecht werden und sollen dabei dennoch eine verbesserte Lebensdauer aufweisen.

Einer reibungsbedingten Lebensdauerverkürzung der Dichtungselemente wird in der Praxis vorrangig durch ein optimiertes Schmieren im Bereich des an der Dichtfläche anliegenden Dichtabschnitts bzw. der Dichtkante des Dichtungselements, den Einsatz von Materialpaarungen mit möglichst geringer Gleitreibung sowie einer optimierten Wärmeabfuhr im Bereich der Dichtzone entgegengewirkt. Für eine Rückförderung von Fluid können die in der Praxis eingesetzten Dichtlippen an ihrer an der Dichtfläche anliegenden Vorderseite sogenannte Tribostrukturen aufweisen. Eine Rotationsdichtungsanordnung mit einer Rotationsdichtung, deren Dichtlippe derlei Tribostrukturen an der der Dichtfläche anliegenden Vorderseite aufweist, ist beispielsweise aus der JP H11 351405 A bekannt geworden. Diese Tribostrukturen unterliegen im Betriebseinsatz der Rotationsdichtungsanordnung zwangsläufig einem Verschleiß, sodass die Rückförderfunktion der Rotationsdichtung oftmals schon nach einer kurzen Einsatzdauer der Rotationsdichtung nicht mehr gewährleistet werden kann. Die Lebensdauer der Rotationsdichtung kann dadurch unnötig verkürzt werden.

Es ist deshalb die Aufgabe der Erfindung, eine Rotationsdichtungsanordnung anzugeben, bei der die Fluid-Rückförderfunktion weniger verschleißabhängig ist. Die die Rotationsdichtungsanordnung betreffende Aufgabe wird durch eine Rotationsdichtung mit den in Anspruch 1 angegebenen Merkmalen gelöst.

Bei der erfindungsgemäßen Rotationsdichtungsanordnung weist die Dichtlippe der Rotationsdichtung an ihrer von der Dichtfläche des zweiten Maschinenelements wegweisenden Rückseite oder an ihrer Stirnseite Taschen auf. Unter einer Tasche wird vorliegend eine Einbuchtung bzw. eine Vertiefung der Dichtlippe verstanden.

Im Falle der rückseitig an der Dichtlippe angeordneten Taschen ergibt sich im Bereich der Taschen jeweils eine lokale Dickenreduktion, d. h. eine Materialschwächung, der Dichtlippe. Bei einer stirnseitig an der Dichtlippe angeordneten Tasche ist diese von der Rückseite sowie auch von der Vorderseite der Dichtlippe beabstandet angeordnet. Die Taschen weisen in diesem Fall mithin eine zur Hochdruckseite oder zur Niederdruckseite des Dichtspalts bzw. der Dichtungsanordnung weisende (gerichtete) Öffnung auf.

Die Taschen der Dichtlippe sind in Umfangsrichtung der Rotationsdichtung voneinander beabstandet an der Dichtlippe angeordnet. Somit ist den Taschen in Umfangsrichtung der Rotationsdichtung bzw. der Dichtlippe jeweils ein nichtmaterialgeschwächtes Umfangssegment der Dichtlippe zwischengeschaltet angeordnet.

Bei der Ausführungsform der Rotationsdichtung mit rückseitig angeordneten Taschen ist die Dichtlippe der Rotationsdichtung durch einen elastisch, bevorzugt gummielastisch, verformbaren Vorspannring gegen die Dichtfläche des zweiten Maschinenelements gespannt. Ist die Rotationsdichtung als ein Radialwellendichtring ausgeführt, so wird die Dichtlippe durch den Vorspannring mithin in einer zur Bewegungsachse radialen Richtung gegen die Dichtfläche vorgespannt. Im Falle einer als Axialwellendichtring ausgebildeten Rotationsdichtung ist die Dichtlippe durch den Vorspannring dementsprechend in axialer Richtung gegen die Dichtfläche des zweiten Maschinenelements vorgespannt. Der Vorspannring ist dabei zur Rotationsdichtung vorzugsweise separat ausgebildet.

Der Vorspannring kann nach der Erfindung insbesondere in Form einer Wurmfeder oder eines Gummi- bzw. Elastomerrings ausgebildet sein. Der Gummi- oder Elastomerring kann eine kreiszylindrische, eine elliptische oder ovale Querschnittsform oder auch einen Freiform-Querschnitt aufweisen. Der Vorspannring kann am ersten Maschinenelement oder einem Anbauteil des ersten Maschinenelements abgestützt sein. Auch kann der Vorspannring, etwa durch ein oder mehrere Wurmfedern, zusätzlich in Richtung auf die Dichtfläche des zweiten Maschinenteils vorgespannt sein.

Die Taschen der Dichtlippe sind in Umfangsrichtung der Rotationsdichtung jeweils (zumindest zu einer Seite hin) durch einen Seitenwandabschnitt der Dichtlippe seitlich begrenzt, der relativ zur Umfangsrichtung zumindest abschnittsweise unter einem spitzen Winkel α, β in Richtung auf die Hochdruckseite H schräg verlaufend angeordnet ist, derart, dass die Dichtlippe an der Dichtfläche in Umfangsrichtung mit einem zur Oberflächenstrukturierung der Rückseite der Dichtlippe, d. h. zum räumlichen Verteilungsmuster ihrer Taschen, korrespondierenden Kontaktpressungsverlauf an der Dichtfläche des zweiten Maschinenelements anliegt, durch den bei einer Relativbewegung der beiden Maschinenteile um die Rotationsachse eine zur Hochdruckseite gerichtete Rückförderung von Fluid bewirkt ist, welches zwischen die Dichtlippe und die Dichtfläche gelangt ist.

Bei der erfindungsgemäßen Rotationsdichtungsanordnung sind die für das Rückfördervermögen der Rotationsdichtung wesentlichen Dichtlippenstrukturen mithin nicht an der dynamisch dichtenden Vorderseite der Dichtlippe angeordnet, die im Betriebseinsatz einem thermischen bzw. mechanischen Verschleiß unterliegt. Vielmehr sind diese Strukturen bei der erfindungsgemäßen Rotationsdichtung in Bereichen der Dichtlippe angeordnet, die während des Betriebseinsatzes der Rotationsdichtungsanordnung von der Dichtfläche des zweiten Maschinenelements beabstandet angeordnet sind. Diese Dichtlippenstrukturen sind somit während des Betriebseinsatzes der Rotationsdichtungsanordnung ohne einen direkten mechanischen Kontakt zur dynamischen Dichtfläche und unterliegen dadurch keinem unmittelbaren reibungsbedingten Verschleiß. Verschleißanfällige Tribostrukturen an der der Dichtfläche zweisenden Vorderseite der Dichtlippe können sich dadurch vollständig erübrigen.

Insgesamt kann dadurch eine effiziente Rückförderung von Fluid über eine längere Einsatzzeit der Rotationsdichtungsanordnung bzw. für Betriebseinsätze mit größeren relativen Umfangsgeschwindigkeiten der beiden Maschinenelemente bzw. bei höheren Betriebsdrücken gewährleistet werden, als dies bei Rotationsdichtungsanordnungen mit herkömmlichen Tribostrukturen an der der Dichtfläche zuweisenden Vorderseite der Dichtlippe möglich ist. Durch das erfindungsgemäße Rückförderprinzip kann zudem eine geringere Leckage, insbesondere bei längeren Laufzeiten der Rotationsdichtungsanordnungen, realisiert werden, als dies mit bisher verfügbaren Rotationsdichtungen möglich ist. Auch kann durch den bewirkten Fluidstrom zur Hochdruckseite mittelbar oder unmittelbar eine Kühlung der Dichtlippe im Bereich ihres Kontaktflächenbereichs mit der Dichtfläche und dadurch einer thermischen Überbeanspruchung der Dichtlippe sowie auch des Fluids entgegengewirkt werden. Bei Einsatz eines Ölfluids kann dadurch zudem einer unerwünschten Ölkohlebildung entgegengewirkt werden.

Im Falle der rückseitig an der Dichtlippe der Rotationsdichtung angeordneten Vertiefungen bzw. Taschen liegt der Vorspannring erfindungsgemäß an der Rückseite der Dichtlippe umlaufend an. Der Vorspannring aktiviert in diesem Fall den Rückfördermechanismus, indem dieser eine durch die Oberflächenstrukturierung der Rückseite der Dichtlippe, d. h. die Rückförderstrukturen, vorgegebene räumliche Kontaktpressungsverteilung der Dichtlippe an der dynamischen Dichtfläche erzeugt. Durch die elastische Vorspannung der Dichtlippe gegen die Dichtfläche wird im Bereich zwischen den Einbuchtungen bzw. Taschen, d.h. in den nicht-materialgeschwächten Umfangsabschnitten der Dichtlippe der Rotationsdichtung, jeweils eine größere Vorpressung der Dichtlippe gegen die Dichtfläche erzeugt, als in den mit den Einbuchtungen bzw. Taschen versehenen Dichtlippenabschnitten. Der Effekt kann zusätzlich durch eine zusätzliche Druckaktivierung der Rotationsdichtung bzw. deren Dichtlippe verstärkt werden. Dieser Unterschied in der Vorpressung führt zu der hier gewünschten Kontaktpressungsverteilung der Dichtlippe an der Dichtfläche, die die gleiche Wirkung hat, wie eine gegenständliche schräge Wand, die durch ein Fluid bewegt bzw. vom Fluid angeströmt wird. Da in Umfangsrichtung der Rotationsdichtung zwischen den Taschen ein höherer Pressungsdruck des Vorspannrings gegen die Dichtlippe und somit der Dichtlippe gegen die Dichtfläche vorliegt, ist der Fluidfilm hier zwangsläufig dünner als in denjenigen Umfangsabschnitten der Dichtlippe, die durch die Einbuchtungen bzw. Taschen geschwächt sind. Der sogenannte Leckagestrom *V̇* des Fluids im Bereich des Kontaktflächenbereichs der Dichtlippe und der Dichtfläche wächst bekanntlich kubisch mit der Schmierfilmdicke d. h., *V̇* ~h³. Insoweit wird der Leckagestrom *V̇* des Fluids zwischen der Dichtlippe und der Dichtfläche des zweiten Maschinenelements hauptsächlich im Bereich der Taschen stattfinden. Strömt ein Fluidteilchen bei einer Rotationsbewegung der beiden Maschinenelemente relativ zueinander, d.h. etwa bei Rotation des als Welle ausgeführten zweiten Maschinenelements, in den Dichtspalt unter einer Tasche, wird das Fluidteilchen auf die durch den zur Umfangsrichtung der Rotationsdichtung bzw. zur Rotationsrichtung der Maschinenelemente schräg verlaufenden Seitenwandabschnitt der Tasche gebildete Kontaktpressungsflanke mit in Umfangsrichtung der Rotationsdichtung steil ansteigender Kontaktpressung, mithin die "Kontaktpressungswand" zwischen einer Kontaktpressungszone mit niedrigem und einer Kontaktpressungszone mit hohem Kontaktpressungsdruck, treffen und durch diese zurück in Richtung auf die Hochdruckseite der Rotationsdichtungsanordnung befördert. Weisen die rückseitigen Taschen der Dichtlippe jeweils nur eine zur Umfangsrichtung unter einem spitzen Winkel schräg verlaufene Seitenwand auf, die die Taschen jeweils in derselben Richtung seitlich begrenzen, so ist die Rückförderfunktion der Rotationsdichtung ersichtlich drehrichtungsabhängig. Im Falle einer als Radialwellendichtring ausgebildeten Rotationsdichtung weist die Rotationsdichtung eine axial zur Hochdruckseite H weisende Rückförderrichtung auf. Im Falle einer als Axialwellendichtring ausgebildeten Rotationsdichtung ist die Rückförderrichtung - bezogen auf die Bewegungsachse der beiden Maschinenelemente - radial in Richtung auf die Hochdruckseite H gerichtet.

In Falle der stirnseitig an der Dichtlippe angeordneten Taschen liegt die Dichtlippe durch ein dem Material der Rotationsdichtung bzw. der Dichtlippe innewohnendes elastisches Rückstellvermögen an der (dynamischen) Dichtfläche vorgespannt dichtend an. Auch bei dieser Ausführungsform ist die Kontaktpressung der Dichtlippe gegen die Dichtfläche im Bereich ihrer mit den Taschen versehenen (geschwächten) Umfangsabschnitte kleiner, als in den nicht-materialgeschwächten Dichtlippenabschnitten. Ein zum Rotationsdichtungselement separat ausgebildeter (gummi-) elastisch verformbarer Vorspannring kann sich bei dieser Ausführungsform somit vollständig erübrigen. Die Dichtlippe kann sich dabei an dem ersten Maschinenelement bzw. an einem Anbauteil des ersten Maschinenelements abstützen und an diesem, insbesondere über eine Dichtkante, unmittelbar statisch dichtend anliegen. Dadurch kann ein besonders einfacher Aufbau sowie eine vereinfachte Montage der Rotationsdichtungsanordnung erreicht werden.

Nach einer bevorzugten Weiterbildung der Erfindung ist die Rotationsdichtung bzw. deren Dichtlippe druckaktivierbar. Im Betriebseinsatz der Rotationsdichtungsanordnung wird die Dichtlippe somit zusätzlich durch einen auf der Hochdruckseite herrschenden Betriebs- oder Fluiddruck - druckproportional zum Betriebsdruck - gegen die Dichtlippe gespannt bzw. gepresst. In den mit Taschen versehenen Dichtlippenbereichen bildet sich dabei - durch den Betriebsdruck P bedingt- eine jeweils geringere Kontaktpressung der Dichtlippe gegen die Dichtfläche aus, als in denjenigen Dichtlippensegmenten, die nicht mit einer Tasche versehen sind. Bei Druckbeaufschlagung der Rotationsichtung mit dem hochdruckseitig herrschenden Betriebsdruck bedingt bei stirnseitig an/in der Dichtlippe angeordneten Taschen eine Kompression, d. h. Verformung, der Rotationdichtung. Die Rotationsdichtung wird in der Folge in Richtung auf die Dichtfläche verformt und mithin - druckproportional zum Betriebsdruck - gegen die Dichtfläche gepresst. Dieser Effekt ist dabei in den nicht-materialgeschwächten Umfangssegmenten der Dichtlippe größer, als in den mit Taschen versehenen und somit materialgeschwächten Dichtlippenbereichen. Bei einer als Radialwellendichtring ausgebildeten Rotationsdichtung wird diese - bevorzugt unter Abstützung an einer niederdruckseitigen Nutflanke einer als Haltenut ausgebildeten Dichtungshaltestruktur des ersten Maschinenteils - in axialer Richtung komprimiert und folglich in radialer Richtung ausweichen und so druckproportional zum Betriebsdruck P gegen die Dichtfläche des zweiten Maschinenteils gepresst. Ist die Rotationsdichtung in Form eines Axialwellendichtrings ausgeführt, so wird die Rotationsdichtung bei Druckbeaufschlagung in radialer Richtung komprimiert und infolgedessen in axialer Richtung ausweichen und so gegen die Dichtfläche des zweiten Maschinenteils gepresst.

Die rückseitig bzw. stirnseitig an der Dichtlippe angeordneten Taschen können sich vorteilhaft über einen Großteil der Längserstreckung der Dichtlippe erstrecken. Dies ist für den Rückfördereffekt der Rotationsdichtung, insbesondere bei druckaktivierbarer bzw. druckaktivierter Rotationsdichtung, von Vorteil.

Ist die Rotationsdichtung mit einem Vorspannring versehen, so kann nach der Erfindung der Vorspannring druckaktivierbar sein.

Nach der Erfindung können die Vertiefungen bzw. Taschen der Dichtlippe in Umfangsrichtung jeweils beiderseitig durch Seitenwandabschnitte der Dichtlippe seitlich begrenzt sein, die zumindest abschnittsweise, vorzugsweise insgesamt, relativ zur Umfangsrichtung der Dichtlippe unter einem spitzen Winkel α, β schräg verlaufend angeordnet sind und die in Richtung auf die Hochdruckseite der Dichtungsanordnung jeweils divergieren. Dadurch kann die Rückförderfunktion der Rotationsdichtung unabhängig von einer jeweiligen Rotationsrichtung der beiden Maschinenelemente realisiert werden. Die Taschen verjüngen sich somit in Richtung auf die Niederdruckseite in ihrer in Umfangsrichtung gemessenen Breite.

Mit anderen Worten sind die Seitenwände der Taschen in Richtung auf die Hochdruckseite divergent verlaufend angeordnet. Entsprechend tritt auch hier ein (Schrägungs-)Winkel α, β, der funktionell betrachtet dem "wandartigen" Kontaktpressungsanstieg der Dichtlippe gegen die Dichtfläche entspricht, auf, und welcher für die Rückförderfunktion der Rotationsdichtung maßgeblich ist. Die Taschen können nach der Erfindung insbesondere einen rechteckigen bzw. auch einen elliptischen/ovalen Querschnitt aufweisen.

Bei der Rotationsdichtung mit rückseitig angeordneten Taschen kann die Kontaktpressung der Dichtlippe in dem zu den Seitenwandabschnitten der Taschen korrespondierenden (fluchtenden) Bereichen der Vorderseite der Dichtlippe dadurch nochmals weiter vergrößert werden, dass die Dichtlippe an ihrer Rückseite im Bereich der Seitenwandabschnitte, vorzugsweise steg- oder rippenartige, Erhebungen oder Wülste aufweist, durch die die Seitenwandabschnitte der Taschen in einer von der Rückseite der Dichtlippe bzw. der Dichtfläche wegweisenden Richtung über die (Oberflächen-) Kontur der Rückseite bzw. der nicht-materialgeschwächten Dichtlippensegmente der Dichtlippe hinaus erhöht sind. Die Seitenwandabschnitte der Vertiefungen sind bei dieser Bauform mit anderen Worten teilweise durch Seitenflanken der Erhebungen bzw. Wülste definiert bzw. gebildet.

Die an der Rückseite der Dichtlippe der Rotationsdichtung angeordneten Einbuchtungen bzw. Taschen können nach einer Weiterbildung der Erfindung über, vorzugsweise nut- oder kerbförmige, Aussparungen bzw. Kanäle der Dichtlippe miteinander fluidisch verbunden sein. Diese Kanäle sind somit ebenfalls an/in der Rückseite der Dichtlippe angeordnet. Im Falle einer radial dichtenden Rotationsdichtung liegt die Dichtlippe mit ihrer Vorderseite in zu den Aussparungen in radialer Richtung fluchtend angeordneten Oberflächenbereichen mit einer im Vergleich zu den nicht materialgeschwächten (dickengeschwächten) Bereichen der Dichtlippe kleineren Kontaktpressung an der Gegenlauffläche (Dichtfläche) des zweiten Maschinenelements an. Bei einer axial dichtenden Anlage der Dichtlippe der Rotationsdichtung an der Dichtfläche fluchten diese Bereiche dementsprechend in axialer Richtung mit den Aussparungen. Dadurch kann das Schmierverhalten im dynamischen Kontaktflächenbereich der Dichtlippe und der Dichtfläche des zweiten Maschinenelements weiter verbessert werden.

Die Rotationsdichtungsanordnung kann erfindungsgemäß zwei oder auch mehr Rotationsdichtungen aufweisen. Diese können einander entgegengerichtete Rückförderfunktion oder aber im Sinne einer Tandemdichtung eine gleichgerichtete Rückförderfunktion für das Fluid aufweisen. Im erstgenannten Fall kann auch bei einer wechselweisen Druckbeaufschlagung der Hochdruckseite und der Niederdruckseite mit einem Betriebsdruck P eine zuverlässige Rückförderung des Fluids zur jeweilig druckbeaufschlagten Seite erreicht werden.

Zu beachten ist des Weiteren, dass die Rotationsdichtung sowie der ggf. vorhandene Vorspannring bzw. weitere Anbauteile der Rotationsdichtungsanordnung in einer an sich bekannten Kartusche angeordnet sein können. Dadurch kann die Bereitstellung der Rotationsdichtung sowie die Montage der Rotationsdichtungsanordnung bei Bedarf weiter vereinfacht werden.

Wie vorstehend bereits erläutert, kann die Rotationsdichtung, bezogen auf die Rotationsachse, in axialer oder in radialer Richtung dichtend ausgeführt sein. Im erstgenannten Fall ist die Rotationsdichtung als ein Axialwellendichtring und im letztgenannten Fall als ein Radialwellendichtring ausgeführt. Ist die Rotationsdichtung als ein Radialwellendichtring ausgeführt, kann in radialer Richtung dynamisch innendichtend oder außendichtend ausgeführt sein.

Die Dichtlippe der Rotationsdichtung kann nach der Erfindung eine Dichtkante aufweisen, die an der Dichtfläche des zweiten Maschinenelements dynamisch dichtend anliegt.

Die Rotationsdichtung kann zumindest teilweise oder vollständig aus einem gummielastisch oder zähelastisch verformbaren Material, insbesondere einem Thermoplast, wie beispielsweise Polytetrafluorethylen bzw. einem sogenannten PTFE-Compound, bestehen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

In der Zeichnung zeigen:

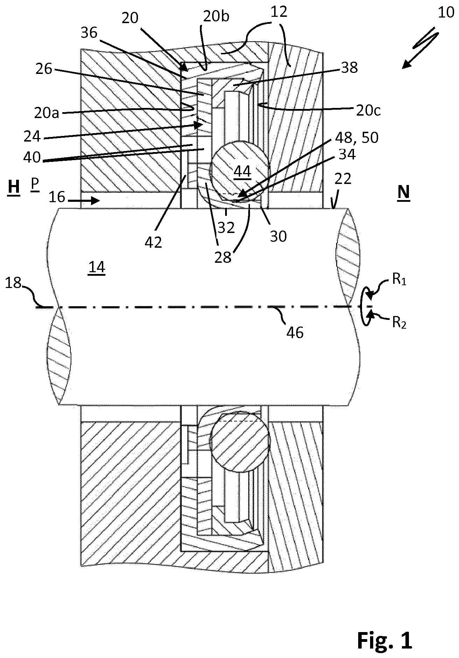

- Fig. 1: eine Rotationsdichtungsanordnung mit einem ersten und mit einem zweiten Maschinenelement, die mittels einer Rotationsdichtung gegeneinander abgedichtet sind, wobei die Rotationsdichtung eine Dichtlippe aufweist, die sich zumindest abschnittsweise parallel oder im Wesentlichen parallel zur Dichtfläche des zweiten Maschinenteils erstreckt, wobei die Dichtlippe an ihrer von der Dichtfläche wegweisenden Rückseite eine Oberflächenstrukturierung aufweist, die sich durch die mittels eines gummielastisch verformbaren Vorspannrings bewirkte vorgespannte dichtende Anlage der Dichtlippe in Form eines in Umfangsrichtung der Rotationsdichtung zur Oberflächenstrukturierung korrespondierenden Kontaktpressungsverlaufs abgebildet ist, durch die bei einer Rotation der beiden Maschinenelemente relativ zueinander eine zur Hochdruckseite H der Rotationsdichtungsanordnung gerichtete Fluidrückförderung bewirkt ist, und wobei die Rotationsdichtung druckaktivierbar ist, in einer teilweise geschnittenen ausschnittsweisen Darstellung;
- Fig. 2: die Rotationsdichtung der Rotationsdichtungsanordnung gemäß Fig. 1 in einer freigestellten perspektivischen Ansicht;
- Fig. 3: die Rotationsdichtungsanordnung gemäß Fig. 1 in einer ausschnittsweisen Darstellung mit schematisch wiedergegebenem Kontaktpressungsverlauf der Dichtlippe und der Dichtfläche;
- Fig. 4: eine Detaildarstellung des in Fig. 3 mit A bezeichneten Ausschnitts mit schematischer Darstellung der Fluid-Rückförderfunktion der Rotationsdichtung;
- Fig. 5: ein softwaregestützt mittels eines Computers erzeugtes Berechnungsmodell der Rotationsdichtung gemäß Fig. 1, in einer perspektivischen Ansicht
- Fig. 6: eine Darstellung des Berechnungsmodells aus Fig. 5 mit grafischer Darstellung des rechnerisch ermittelten Kontaktpressungsverlaufs im Bereich der Dichtlippe der Rotationsdichtung im Einbauzustand bei einer Rotationsdichtungsanordnung gemäß Fig. 1, in einer perspektivischen Ansicht;
- Fig. 7: eine Darstellung des Berechnungsmodells aus Fig. 5 mit grafischer Darstellung des rechnerisch ermittelten Kontaktpressungsverlaufs im Bereich der Dichtlippe der Rotationsdichtung im Einbauzustand bei einer Rotationsdichtungsanordnung gemäß Fig. 1, in einer Seitenansicht;
- Fign. 8: die Rotationsdichtung gemäß Fig. 2 in einer Draufsicht (Fig. 8A) sowie in einer Seitenansicht mit einem zylindrischen Koordinatensystem;
- Fig. 9: eine Kurvenschar mit Darstellung des räumlichen Verlaufs der Kontaktpressung in Umfangsrichtung der Rotationsdichtung entlang dreier paralleler Schnitte der Dichtlippe der Rotationsdichtung, die gemäß Fig. 8B in Richtung der Z-Achse hintereinanderliegend angeordnet sind;
- Fig. 10: eine weitere Rotationsdichtungsanordnung, bei der der elastisch verformbare Vorspannring der Dichtlippe zusätzlich in radialer Richtung außenseitig abgestützt ist, um die Verpressung der Dichtlippe gegen die Dichtfläche des zweiten Maschinenteils zu vergrößern, in einer ausschnittsweisen Schnittdarstellung;
- Fig. 11: eine weitere Rotationsdichtungsanordnung mit einem Vorspannring, der eine von einer kreisförmigen Querschnittsform abweichende Querschnittsform aufweist, in einer ausschnittsweisen Schnittdarstellung;
- Fig. 12: eine weitere Rotationsdichtungsanordnung mit einer in axialer Richtung dichtenden Rotationsdichtung, in einer ausschnittsweisen Schnittdarstellung;
- Fig. 13: die Rotationsdichtung der in Fig. 12 gezeigten Rotationsdichtungs-anordnung, in einer freigestellten perspektivischen Ansicht;
- Fig. 14: eine weitere Rotationsdichtungsanordnung, bei der die Dichtlippe der Rotationsdichtung zusätzlich druckaktivierbar ist, in einer ausschnittsweisen Schnittdarstellung;
- Fig. 15: eine weitere Rotationsdichtungsanordnung mit einer Rotationsdichtung, die an ihren Stirnseiten mit Taschen versehen ist, die in Umfangsrichtung voneinander beabstandet angeordnet sind, wobei die Dichtlippe druckaktivierbar ist, in einer ausschnittsweisen Schnittdarstellung;
- Fig. 16: die Rotationsdichtung gemäß Fig. 15 in einer freigestellten Schnittdarstellung;
- Fig. 17: eine Rotationsdichtungsanordnung mit zwei Rotationsdichtungen, durch die im Betriebseinsatz eine bidirektionale Rückförderung des Fluids bei wechselweiser Druckbeaufschlagung der Hochdruckseite H und der Niederdruckseite N bewirkt ist;
- Fig. 18: eine Ausführungsform einer Rotationsdichtung, bei der die Oberflächenstrukturierung der Rückseite der Dichtlippe einen fließenden Übergang zwischen den durch Taschen materialgeschwächten Dichtlippenbereichen und nicht-materialgeschwächten Dichtlippensegmenten aufweist; in einer freigestellten perspektivischen Ansicht;
- Fig. 19: eine ausschnittsweise vergrößerte Detaildarstellung der Rotationsdichtung gemäß Fig. 18;
- Fign. 20: eine Seitenansicht (Fig. 20A) und eine detailvergrößerte Ansicht (Fig. 20B) der Rotationsdichtung gemäß Fig. 18;
- Fig. 21: eine Rotationsdichtung, deren Dichtlippe rückseitig angeordnete Taschen und zusätzliche Erhebungen aufweist, um die Kontaktpressung der Dichtlippe gegen die dynamische Dichtfläche an vorgegebenen Bereichen lokal zu vergrößern; und
- Fig. 22: eine Rotationsdichtung, bei der die rückseitig an der Dichtlippe angeordneten Taschen durch Kanäle miteinander verbunden sind.

**Fig. 1** zeigt eine Rotationsdichtungsanordnung **10** mit einem ersten und mit einem zweiten Maschinenelement **12, 14,** die unter Ausbildung eines Dichtspalts **16** voneinander beabstandet und um eine Rotationsachse **18** in einander entgegengesetzte Rotationsrichtungen **R₁, R₂** relativ zueinander rotierbar angeordnet sind. Das erste Maschinenelement 12 weist eine Dichtungshaltestruktur, hier eine Haltenut **20** mit einer hochdruckseitigen Nutflanke **20a,** einem Nutgrund **20b** und einer niederdruckseitigen Nutflanke **20c** auf. Das zweite Maschinenelement 14 weist eine dynamische Dichtfläche **22** auf. Zum Abdichten einer mit einem Fluid druckbeaufschlagbaren Hochdruckseite **H** gegenüber einer Niederdruckseite **N** des Dichtspalts 16 dient eine Rotationsdichtung **24.** Die Rotationsdichtung 24 ist hier als ein sogenannter Radialwellendichtring ausgeführt. Die Rotationsdichtung 24 kann einstückig ausgeführt sein und weist einen im Wesentlichen radial verlaufend angeordneten Halteabschnitt **26** und eine Dichtlippe **28** mit einer Dichtkante **30** auf, die sich in axialer Richtung vom Halteabschnitt 26, hier in Richtung der Niederdruckseite N wegerstreckt. Die Dichtlippe 28 ist abschnittsweise parallel bzw. im Wesentlichen parallel zur Dichtfläche 22 des zweiten Maschinenelements 14 verlaufend angeordnet. Die Dichtlippe 28 liegt mit ihrer Vorderseite **32** an der Dichtfläche 22 des zweiten Maschinenteils 14 dynamisch dichtend an. Die Rückseite der Dichtlippe ist mit **34** bezeichnet. Die Rückseite 34 der Dichtlippe 28 weist somit in einer hier radialen Richtung von der Dichtfläche 22 weg. Der Halteabschnitt 26 ist hier mittels eines Stützrings **36** und eines Klemmrings **38** in der Haltenut 20 des ersten Maschinenelements 12 geklemmt gehalten angeordnet und dadurch am ersten Maschinenelement 12 drehfest festgelegt. Andere Befestigungsarten wie z.B. eine Verstiftung des Halteabschnitts, sind vorstellbar.

Der Stützring 36 sowie auch der Halteabschnitt 26 der Rotationsdichtung 24 weisen jeweils eine oder mehrere Durchgangsbohrungen **40** auf, durch die eine fluidische Verbindung der Hochdruckseite H mit der Haltenut 20 des ersten Maschinenelements 12 ermöglicht ist. Das erste Maschinenteil kann bei Bedarf eine mit **42** bezeichnete Nut aufweisen, um einen hochdruckseitigen Zustrom von Fluid zu den Durchgangsbohrungen 40 zu gewährleisten. Die Haltenut 20 ist dadurch während des Betriebseinsatzes der Rotationsdichtungsanordnung 10 mit einem auf der Hochdruckseite H herrschenden Betriebsdruck P druckbeaufschlagbar. Die Rotationsdichtung 24 bzw. deren Dichtlippe 28 ist dadurch druckaktivierbar. Mit anderen Worten führt eine Druckbeaufschlagung der Hochdruckseite H mit einem Betriebsdruck P zu einer zum Betriebsdruck P druckproportionalen Anpressung der Dichtlippe 28 gegen die Dichtfläche 22 in einer - hier -zur Rotationsachse 18 radialen Richtung. Die Dichtlippe 28 ist durch einen gummielastisch verformbaren Vorspannring **44** gegen die Dichtfläche 22 vorgespannt. Der Vorspannring 44 liegt an der Rückseite 34 der Dichtlippe 28 umlaufend an. Der Vorspannring 44 kann insbesondere als ein Elastomer- oder Gummiring bzw. als eine Metallfeder (Wurmfeder) ausgeführt sein. Der Vorspannring 44 und die Rotationsdichtung 24 sind zur Rotationsachse 18 bzw. zu der mit **46** bezeichneten Mittelachse der Rotationsdichtung 24 koaxial angeordnet.

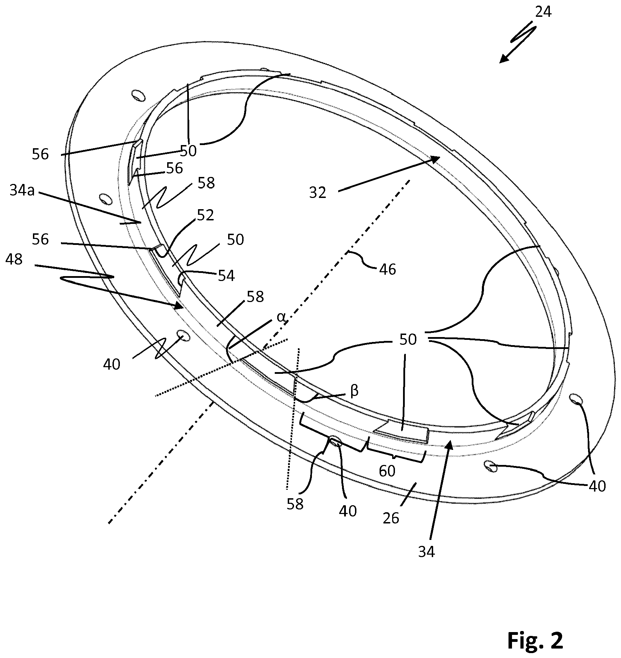

In **Fig. 2** ist die Rotationsdichtung 24 der in Fig. 1 gezeigten Rotationsdichtungsanordnung 10 in einer freigestellten perspektivischen Ansicht gezeigt.

Die Rotationsdichtung 24 weist eine Rückförderfunktionalität für Fluid auf, die im Wesentlichen auf einer makroskopisch sichtbaren Oberflächenstrukturierung **48** der Rückseite 34 der Dichtlippe 28 basiert. So weist die Dichtlippe 28 an ihrer Rückseite 34 mehrere Taschen **50** auf. Die Taschen 50 sind in Umfangsrichtung der Rotationsdichtung 24 voneinander beabstandet angeordnet. Gemäß Fig. 2 sind die Taschen 50 in der Dichtlippe 28 beiderseitig jeweils durch einen ersten und einen zweiten Seitenwandabschnitt **52, 54** der Dichtlippe 28 (in Umfangsrichtung) begrenzt. Die beiden Seitenwandabschnitte 52, 54 sind mithin einander gegenüberliegend angeordnet und weisen einander zu. Zu beachten ist, dass die beiden Seitenwandabschnitte 52, 54 relativ zur Umfangsrichtung der Dichtlippe 28 jeweils unter einem spitzen Winkel **α, β** schräg verlaufend angeordnet sind. Die Seitenwandabschnitte 52, 54 sind jeweils über eine Kante **56** mit der (Oberfläche **34a** der) Rückseite 34 der Dichtlippe 28 verbunden.

Dadurch, dass der elastisch verformbare Vorspannring 44 an der Dichtlippe 28 in radialer Richtung außenseitig umlaufend anliegt und die Dichtlippe gegen die Dichtfläche 22 spannt, wird durch den Vorspannring 44 in den Dichtlippenbereichen zwischen den Taschen 50 , d. h. in den nicht durch Taschen 50 materialgeschwächten Umfangssegmenten **58** der Dichtlippe 28 , eine höhere radiale Vorpressung bzw. Vorspannung der Dichtlippe 28 gegen die Dichtfläche 22 des zweiten Maschinenteils 14 erzeugt, als im Bereich der mit Taschen 50 versehenen Dichtlippenbereiche **60** bzw. Taschensegment der Dichtlippe 28. Dieser Unterschied in der - hier radial gerichteten - Vorspannung bzw. Vorpressung der Dichtlippe 22 führt zu einer hier gewünschten Kontaktpressungsverteilung der Dichtlippe 28 gegen die Dichtfläche 22.

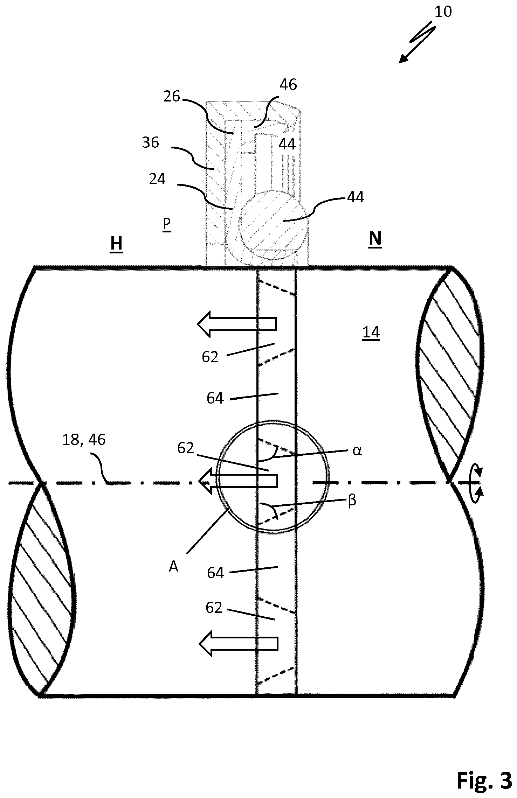

Die Dichtlippe 28 liegt dadurch in Umfangsrichtung der Rotationsdichtung mit einem zum räumlichen Verteilungsmuster der Taschen 50 korrespondierenden Kontaktflächenpressungsverlauf an der Dichtfläche 22 des zweiten Maschinenteils 14 dynamisch dichtend an. Es ist hier gemäß **Fig. 3** im Wesentlichen zu unterscheiden zwischen ersten Dichtzonen **62** der Dichtfläche 22 mit kleiner Kontakt(flächen)pressung und zweiten Dichtzonen **64** mit gegenüber den ersten Dichtzonen 62 großer Kontaktpressung der Dichtlippe 28 und der Dichtfläche 22.

In den ersten Dichtzonen 62 liegen die mit Taschen 50 versehenen Dichtlippenbereiche 60 und in den zweiten Dichtzonen 64 die nicht mit Taschen 50 versehenen Umfangssegmente 58 der Dichtlippe 28 (Fig. 2) an der Dichtfläche 22 dynamisch dichtend an. Die rückseitige Oberflächenstrukturierung 48 der Dichtlippe 28 wird somit in Form eines dazu in Umfangsrichtung korrespondierenden Kontaktpressungsverlaufs der Dichtlippe 28 und der Dichtfläche 20 abgebildet.

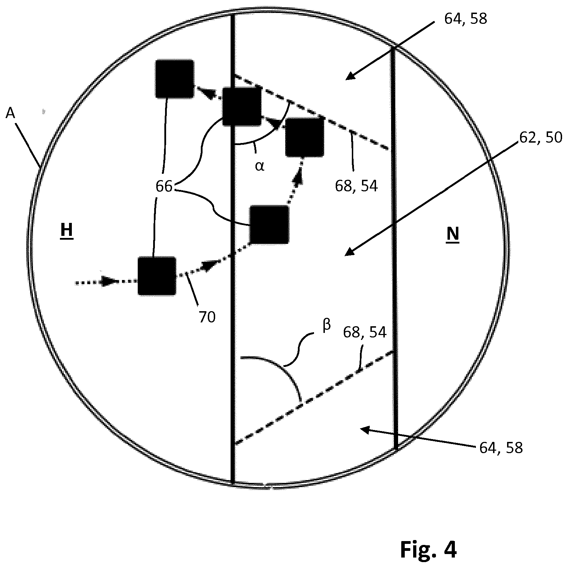

Aufgrund der größeren dichtflächenseitigen Kontaktpressung der nicht-materialgeschwächten Umfangssegmente 58 der Dichtlippe 28 im Bereich der zweiten Dichtzonen 64 der Dichtfläche 22 ist ein zwischen der Dichtlippe 28 und der Dichtfläche 22 ausgebildeter Fluidfilm hier zwangsläufig dünner, als in den mit den Taschen 50 versehenen Dichtlippenbereichen 60. Nachdem ein - hier axial gerichteter - Leckagestrom ***V̇*** des Fluids von der Hochdruckseite H auf die Niederdruckseite N der Rotationsdichtungsanordnung 10 (Fig. 1) kubisch mit der Schmierfilmdicke h wächst, ***V̇* ~ *V̇∼h³*** , wird der Leckagestrom ***V̇*** hauptsächlich in den Dichtlippenbereichen 60 der Dichtlippe 28 und der Dichtfläche 22 des zweiten Maschinenelements 14 stattfinden, wie dies in Fig. 3 und der ausschnittsweisen Detailvergrößerung des in Fig. 3 mit A bezeichneten Bereichs gemäß **Fig. 4** dargestellt ist.

Strömt ein in Fig. 4 mit **66** bezeichnetes Fluidteilchen beispielsweise bei rotierendem zweiten Maschinenelement 14 von der Hochdruckseite H axial in Richtung auf die Niederdruckseite N in den Dichtspalt 16 zwischen ein eine Tasche 50 aufweisenden Dichtlippenbereich 60 und der Dichtfläche 22, so wird das Fluidteilchen 66 die linienförmige und funktionell betrachtet wandartigen steilen Kontaktpressungsflanke **68,** die mit einem der schräg verlaufenden Seitenwandabschnitte 52, 54 der Tasche 50 der Dichtlippe 28 korrespondiert, anströmen und dadurch zurück zur Hochdruckseite H gefördert. In Fig. 4 ist dieses Rückförderprinzip stark schematisiert verdeutlicht. Die gekrümmte Bahnlinie **70** des Fluidteilchens 66 ergibt sich durch die Überlagerung von Druckströmung (Öl steht unter Druck) und Schleppströmung, d.h. das rotierende Maschinenelement 14 schleppt das Fluid in der jeweiligen Rotationsrichtung R₁, R₂ bzw. in Umfangsrichtung mit.

Die Winkel α, β der Seitenwandabschnitte relativ zur Umfangsrichtung, die Anzahl der Taschen 50 und das Flächenverhältnis der mit Taschen 50 versehenen Dichtlippenbereiche 60 zu nicht materialgeschwächten Dichtlippensegmenten 58 sind grundlegende Parameter, die die Effektivität der Rückförderung des Fluids bestimmen.

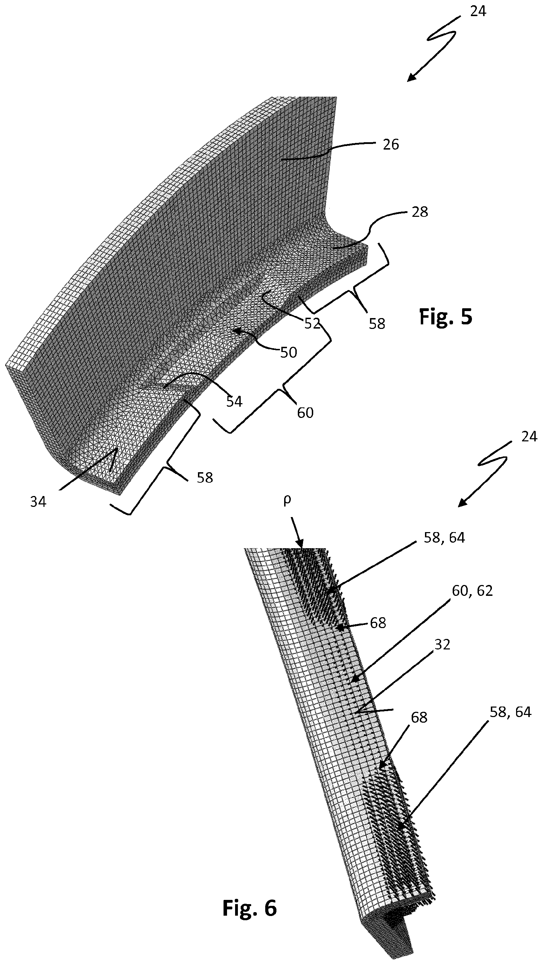

In **Fig. 5** ist ein mittels Software generiertes Berechnungsmodell der Rotationsdichtung 26 gemäß den Fign. 1 bis 3 mit einer einzelnen an der Dichtlippe 28 rückseitig angeordneten Tasche 50 in einer freigestellten Ansicht gezeigt. Zu beachten ist, dass das Berechnungsmodell auch die anderen in Abbildung 1 dargestellten Bauteile der Rotationsdichtungsanordnung 10 mitberücksichtigt. Das Berechnungsmodell ermöglicht die Berechnung der Kontakt(flächen)pressung, die sich in der dynamischen Dichtfläche 22 des zweiten Maschinenelements 14 ergibt. Das Ergebnis ist in **Fig. 6** grafisch dargestellt zu sehen. Es zeigt sich wie erwartet, dass im Bereich der Tasche 50, d.h. des mit einer Tasche versehenen Dichtlippenbereichs 60 der Dichtlippe 28, die durch Pfeile dargestellte Kontaktpressung **p** der Dichtlippe 28 der Rotationsdichtung 24 kleiner ist (kürzere Pfeile) als im Bereich zwischen den Taschen (längere Pfeile). Auch ist zu erkennen, dass sich die Winkel α, β (vgl. Abbildung 3) in der Pressungsverteilung abzeichnen.

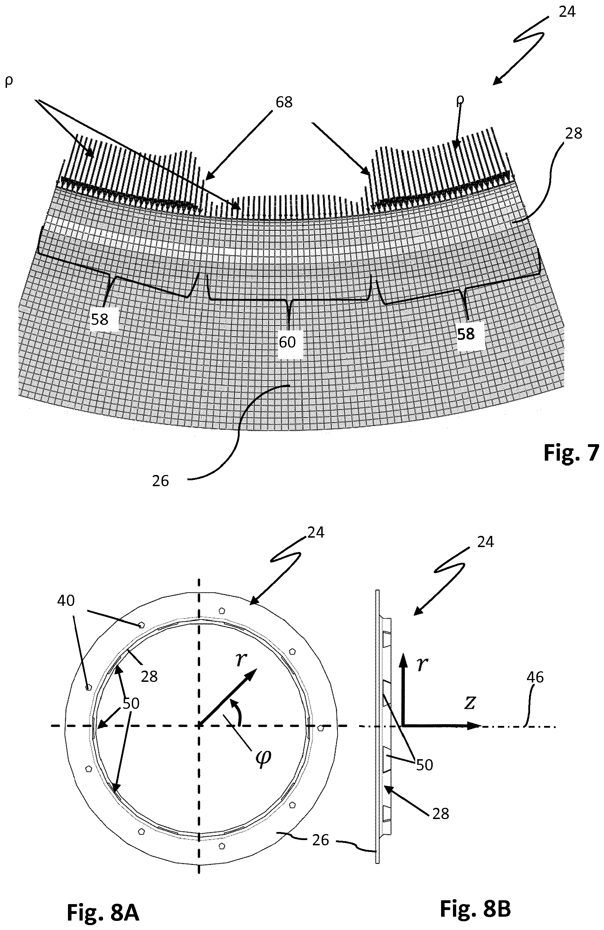

In **Figur 7** ist ergänzend eine vektorielle Darstellung der Kontaktpressung p zwischen Dichtlippe 28 und Dichtfläche 22 (vgl. Fig. 1) gezeigt. Der variable Kontaktpressungsverlauf in Umfangsrichtung der Rotationsdichtung 24 mit den Kontaktpressungsflanken 68 ist deutlich zu erkennen.

Die **Fign. 8** zeigen die Rotationsdichtung 24 in einer stirnseitigen Ansicht (Fig. 8a) und in einer Seitenansicht (Fig. 8b) gemeinsam mit einem zylindrischen Koordinatensystem. Z bezeichnet die Position auf der Z-Achse, die mit der Mittelachse 46 (Fig. 1) der Rotationsdichtung 24 zusammenfällt. R stellt den radialen Abstand vom Zentrum dar. Der Winkel ϕ bezeichnet die Umfangsposition um das Zentrum.

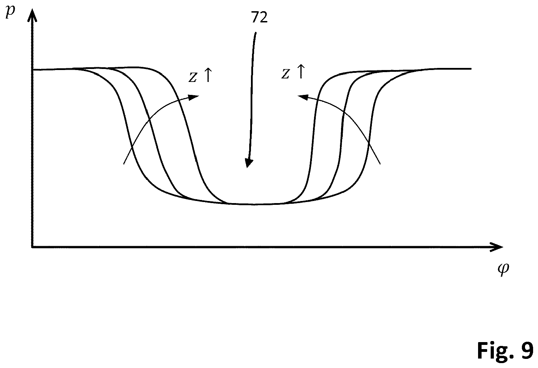

**Fig. 9** zeigt eine Kurvenschar mit räumlich aufgelösten Kontaktpressungsverläufen entlang dreier verschiedener Schnitte der Rotationsdichtung 24, die in Z-Richtung zueinander parallel versetzt angeordnet sind. Die drei Schnitte gehören mithin zu drei verschiedenen Z-Koordinaten gemäß dem in Fig. 8B dargestellten zylindrischen Koordinatensystem. Die Kurvenschar basiert hier nicht auf einer mathematischen Berechnung der Kontaktpressungsverläufe, sondern ist als eine Prinzipdarstellung zu verstehen. Es ist zu erkennen, dass mit zunehmender Z-Koordinate (d.h. axial in Richtung auf die Niederdruckseite N) das durch die Tasche 50 gebildete Pressungstal **72** schmaler wird. Dies liegt daran, dass mit zunehmender Z-Koordinate die Ausdehnung der Tasche in ϕ-Richtung (und damit im Einbauzustand der Rotationsdichtung 24 zur Niederdruckseite N hin) kleiner wird.

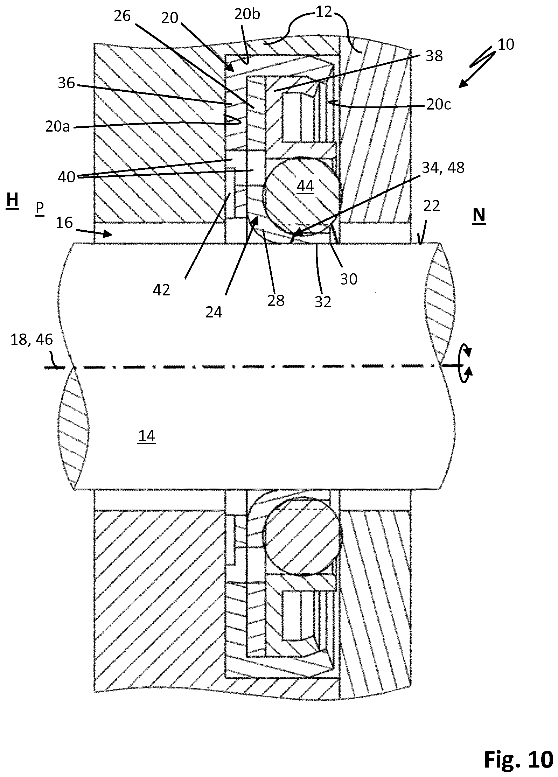

**Fig. 10** zeigt eine weitere Ausführungsform der Rotationsdichtungsanordnung 10. Der elastisch vorformbare Vorspannring 44 ist hier in radialer Richtung außenseitig an einer Stützstruktur des die Dichtungshaltestruktur aufweisenden ersten Maschinenelements 12, hier einem modifizierten Klemmring 38 unmittelbar abgestützt. Durch die Abstützung des Vorspannrings 44 kann die Verpressung der Dichtlippe 28 gegen die Dichtfläche 22 d. h. die Kontaktpressung p der Dichtlippe 28 und der Dichtfläche 22 weiter vergrößert werden. Insgesamt lässt sich hier über ein nochmals breiteres Anwendungsspektrum gewährleisten, dass die Dichtlippe 28 der Rotationsdichtung 24 auch im Bereich der rückseitigen Taschen 50 eine von Null verschiedene Kontaktpressung p aufweist.

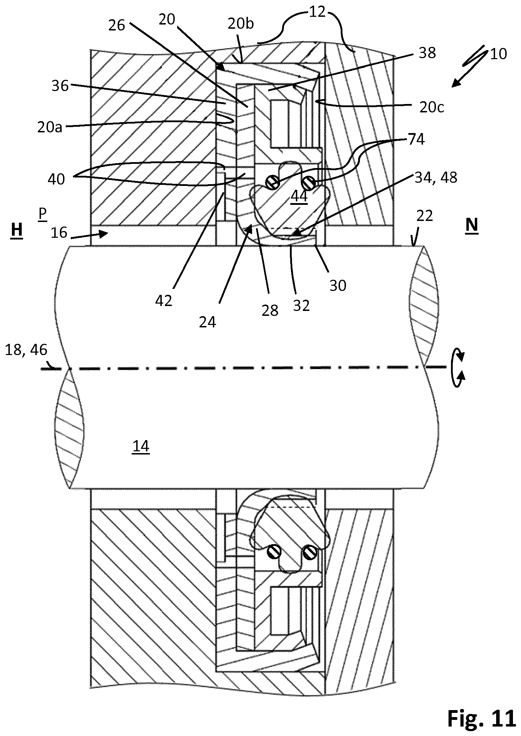

Gemäß der in **Fig. 11** gezeigten Rotationsdichtungsanordnung 10 kann die Vorspannung der Dichtlippe 28 gegen die Dichtfläche 22 auch durch eine oder mehrere Schnurfedern bzw. Wurmfederelemente **74** vergrößert werden, die den elastisch verformbaren Vorspannring 44 radial außenseitig umgreifen. Der Vorspannring 44 muss dabei kein O-Ring sein, wie dies beispielsweise in Fig. 10 gezeigt ist, sondern kann gemäß Fig. 11 auch eine andere, hier gelappte, Querschnittsform aufweisen, etwa um die Positionsstabilität der Schnurfeder(n) weiter zu verbessern. Hierdurch kann zudem die Nutfüllung der als Dichtungshaltestruktur dienenden Haltenut 20 des ersten Maschinenelements 12, beispielsweise zwecks Druckbeaufschlagung mit dem Betriebsdruck P, reduziert werden.

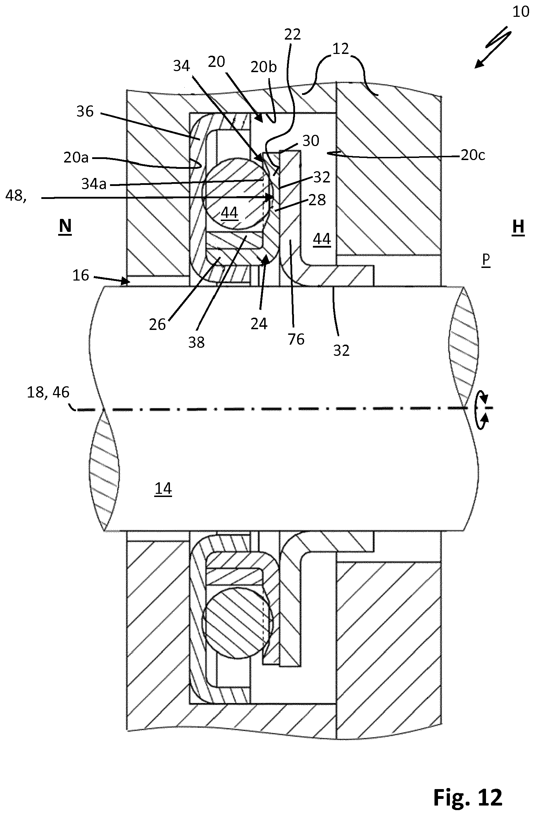

Die Rotationsdichtungsanordnung 10 kann, wie vorstehend erläutert, auch eine in axialer Richtung dynamisch dichtende Rotationsdichtung 24 in Form eines Axialwellendichtrings aufweisen. Gemäß **Fig. 12** kann hierzu auf dem zweiten Maschinenteil 14 beispielsweise ein Ringbund **76,** etwa in Form einer abgewinkelten Metallhülse, drehfest angeordnet sein, der die dynamische Dichtfläche 22 bildet. Der Ringbund 76 kann auf dem zweiten Maschinenelement 14 z. B. aufgepresst oder an diesem festgeschweißt oder auch an diesem angeformt sein. Der Ringbund 76 rotiert hier gemeinsam mit dem zweiten Maschinenelement 14 um die Rotationsachse 18. Der Axialwellendichtring kann aus PTFE oder einem PTFE-Compound bestehen. Die rückseitig in der Dichtlippe 28 angeordneten Taschen 50 sind gut zu erkennen. Die rückseitige Kontur der Dichtlippe 28 ist in einem der nicht materialgeschwächten Umfangssegmente der Dichtlippe 28 mit gestrichelter Linie 34a wiedergegeben.

Das erste Maschinenelement 12 ist hier als ein mehrteiliges Wellengehäuse ausgeführt. Wie auch bei den vorstehend erläuterten Ausführungsvarianten der Rotationsdichtungsanordnung 10 erzeugt der elastisch verformbare Vorspannring 44, hier ein O-Ring, aufgrund der Taschen in der Rückseite 34 der Dichtlippe 28 einen zum räumlichen Verteilungsmuster der Taschen korrespondierendes Kontaktpressungsverlauf der Dichtlippe 28 an der Dichtfläche. Das vom Ringbund 76 mitgeschleppte Fluid erfährt durch diese Kontaktflächenpressungsverteilung eine Ablenkung in positiver radialer Richtung. Es wird somit auf die abzudichtende Hochdruckseite H des Dichtspalts 16 zurückgefördert.

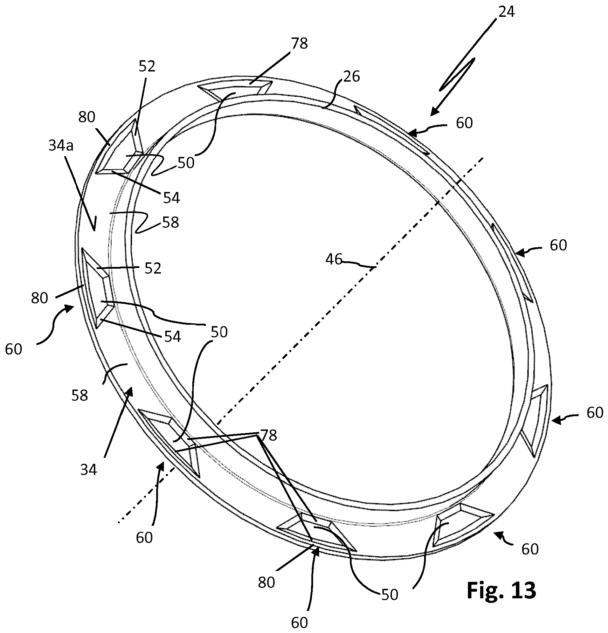

**Fig. 13** zeigt die axial dichtende Rotationsdichtung aus Fig. 12 in einer freigestellten Ansicht. Die Taschen 50 in der Rückseite 34 der Dichtlippe 28 sind gut zu erkennen. Ebenfalls ist in Fig. 13 sichtbar, dass die Taschen - bezogen auf die Mittelachse 46 der Rotationsdichtung 24 - in Umfangsrichtung durch rampenförmig ausgeführte bzw. geneigte Seitenwandabschnitte 52, 54, begrenzt sind. Es versteht sich, dass derlei geneigte Seitenwandabschnitte 52, 54 auch bei den vorstehend im Zusammenhang mit den Figuren 1 bis 12 erläuterten Rotationsdichtungen 10 möglich sind. Darüber hinaus sind die Taschen auch einer zur Mittelachse der Rotationsdichtung 24 radialen Richtung durch Wandabschnitte **78** begrenzt. Diese Wandabschnitte 78 können ihrerseits ebenfalls in einer zu den Seitenwandabschnitten 52, 54 entsprechenden Weise (zur Oberfläche 34a der Rückseite 34 der Dichtlippe 28) geneigt sein. Zu beachten ist, dass die mit Taschen 50 versehenen Dichtlippenbereiche 60 der vorstehend erläuterten Rotationsdichtungen 24 einen in radialer Richtung außenliegend angeordneten freien Randabschnitt **80** aufweisen können, der nicht materialgeschwächt ist. Der elastisch verformbare Vorspannring 44 kann dadurch auch im Bereich der Taschen 50 gegenüber einem - hier radialen - Abrutschen von der Dichtlippe 28 gesichert werden.

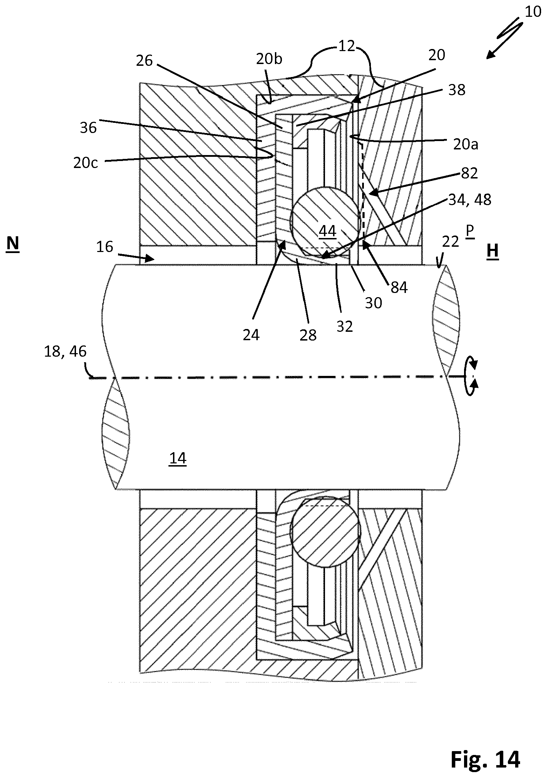

Die Dichtlippe 28 der Rotationsdichtung 10 kann sich grundsätzlich auch in Richtung auf die Hochdruckseite H der Rotationsdichtungsanordnung 10 vom Halteabschnitt 26 wegerstrecken. Gemäß dem in **Fig. 14** gezeigten Ausführungsbeispiel kann dabei das die Haltenut 20 aufweisende erste Maschinenelement 12 für die zusätzliche Druckaktivierung der Rotationsdichtung 24 eine Bohrung **82** aufweisen, durch die eine fluidische Verbindung der Hochdruckseite H mit der Haltenut 20 bewirkt ist.

Es versteht sich, dass die Haltenut 20 alternativ oder zusätzlich zur Bohrung 82 auch an ihrer hochdruckseitig angeordneten Nutflanke 20a einen nutförmigen Strömungskanal **84** für das auf der Hochdruckseite H angeordnete Fluid aufweisen kann. Dieser Strömungskanal 84 verläuft mithin radial in Richtung auf den Nutboden 20b. Zu beachten ist, dass auch hier die Seitenwandabschnitte (52, 54; vgl. Fig. 2) der an der Rückseite 34 der Dichtlippe 28 angeordneten Taschen 50 in Richtung auf die Hochdruckseite H divergieren.

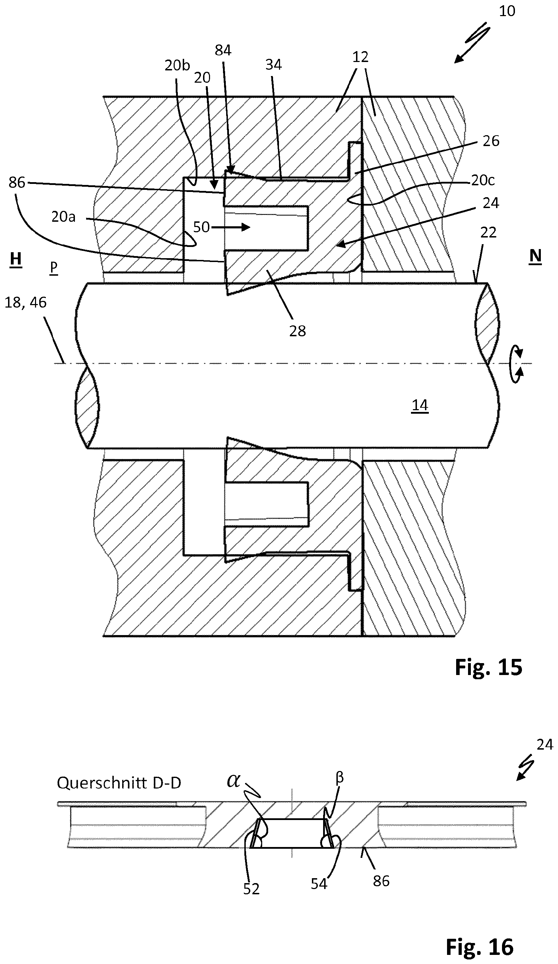

**Fig. 15** zeigt eine Rotationsdichtungsanordnung 10, bei der die Rotationsdichtung 24 ohne einen dazu separat ausgebildeten Vorspannring 44 an der Dichtfläche 22 des zweiten Maschinenelements 14 vorgespannt dichtend anliegt. Dies aufgrund eines dem Material der Rotationsdichtung 24 innewohnenden elastischen Rückstellvermögens. Die Rotationsdichtung 24 ist hier beispielhaft als ein Radialwellendichtring ausgeführt. Es versteht sich, dass die Rotationsdichtung auch als Axialwellendichtring ausgeführt sein kann. Die Rotationsdichtung 24 ist mit ihrer Dichtlippe 28 zwischen dem ersten Maschinenelement 12 und dem zweiten Maschinenelement 14 - hier in radialer Richtung - geklemmt gehalten angeordnet. Die Dichtlippe liegt rückseitig mit einem statisch dichtenden Dichtabschnitt **84** an dem ersten Maschinenelement 12, hier beispielhaft dem Nutboden 20b einer als Haltenut 20 ausgeführten Dichtungshaltestruktur statisch dichtend an. Die dynamische Dichtlippe 28 der Rotationsdichtung 34 weist hier an ihrer der Hochdruckseite H zuweisenden Stirnseite **86** Taschen 50 auf. Die Taschen 50 sind auch hier in Umfangsrichtung der Rotationsdichtung 34, vorzugsweise regelmäßig, voneinander beabstandet angeordnet. Die Rotationsdichtung ist durch den auf der Hochdruckseite H der Rotationsdichtungsanordnung 10 herrschenden Betriebsduck (Fluiddruck) P druckaktivierbar.

Durch den Betriebsdruck P ist im Bereich der nicht-materialgeschwächten Umfangssegmente 58 der Dichtlippe eine größere Kontaktflächenpressung der Dichtlippe 28 gegen die Gegenlauffläche, d. h. die Dichtfläche 22, bewirkt, als in den mit Taschen versehenen Dichtlippenbereichen.

Gemäß **Fig. 16** verjüngen sich die Taschen 50 der Dichtlippe 28 von der Stirnseite 86 mit zunehmender axialer Tiefe bezogen auf die Mittelachse 46 der Rotationsdichtung 34 (in Umfangsrichtung). Die Seitenwandabschnitte 52, 54 divergieren in Richtung auf die Hochdruckseite H. Dementsprechend sind die Seitenwandabschnitte 52, 54 der Taschen auch hier unter einem Winkel α, β zur Umfangsrichtung schräg verlaufend angeordnet. Das Prinzip der FluidRückförderung funktioniert auch hier wie dies vorstehend im Zusammenhang Fign. 3 und 4 erläutert ist.

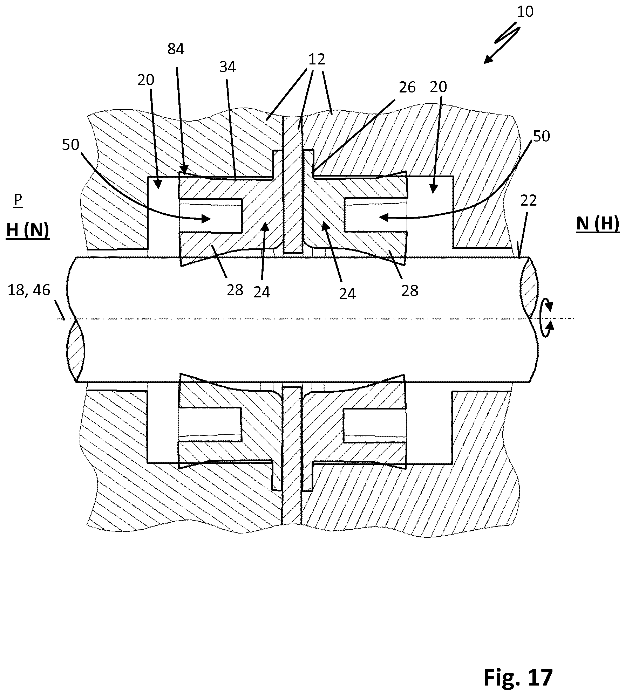

Die Rotationsdichtungsanordnungen 10 weisen dazu im konstruktiv einfachsten Fall zwei Rotationsdichtungen 28 auf, die (entlang der Dichtfläche 22) hintereinanderliegend angeordnet sind. Die Dichtlippen 28 der beiden Rotationsdichtungen 10 können dabei mit einander zuweisenden, voneinander wegweisenden oder aber mit gleichsinnig ausgerichteten Stirnseiten 86 angeordnet sein. Wesentlich ist, dass die beiden Rotationsdichtungen 34 einander entgegengesetzte Rückförderwirkungen aufweisen. **Fig. 17** zeigt dies beispielhaft für die in den Fign. 15 und 16 dargestellte Variante. Die beiden Rotationsdichtungen 23 können zur Trennung zweier Medienräume eingesetzt werden, die einseitig, beidseitig oder wechselseitig druckbelastet sein können. Gemäß einer in der Zeichnung nicht näher gezeigten Ausführungsvariante kann die Rotationsdichtungsanordnung 10 auch eine einzelne medientrennend wirkende Rotationsdichtung 24 aufweisen. Diese Rotationsdichtung 34 weist dann zwei Dichtlippen 28 auf, die mit voneinander wegweisenden Stirnseiten angeordnet sind.

Denkbar ist darüber hinaus eine Rotationsdichtungsanordnung 10 mit einer Tandemanordnung zweiter Rotationsdichtungen 24, die in ihrer Rückförderrichtung miteinander übereinstimmen.

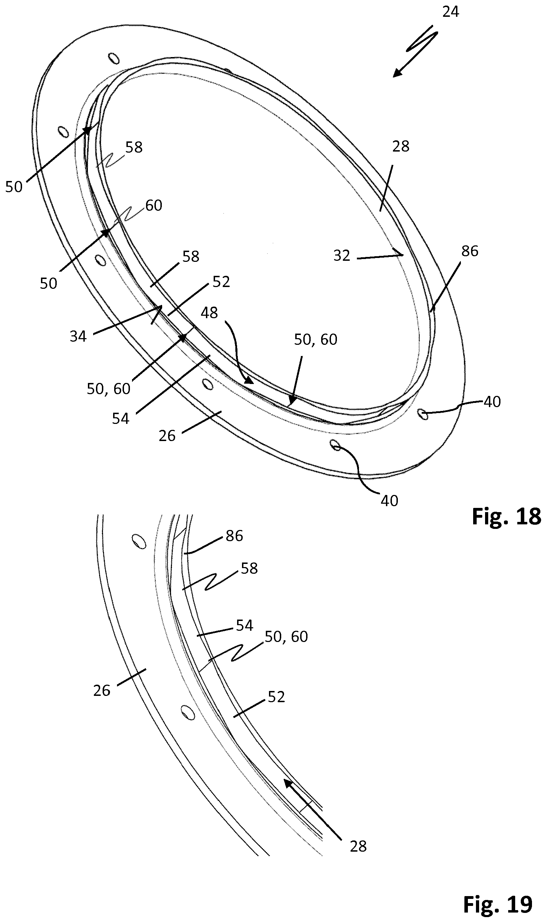

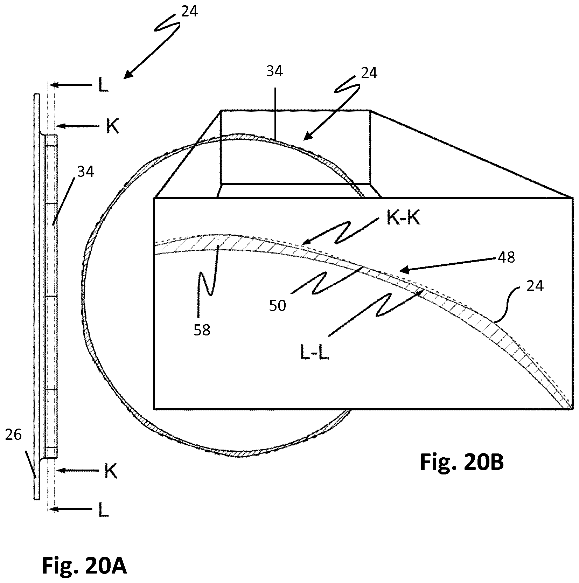

Bei den vorstehend erläuterten Ausführungsbeispielen sind die Taschen 50 der Dichtlippe 28 jeweils durch Seitenwandabschnitte 52, 54 begrenzt, die einen scharfkantigen Übergang zur (Oberfläche der) Rückseite 34 der Dichtlippe 28 aufweisen. Gemäß dem in den **Fign. 18** bis **20** gezeigten Rotationsdichtung 24 kann die Rückseite 34 der Dichtlippe 28 auch eine wellige Oberflächenkonturierung aufweisen. Hier gehen die Seitenwandabschnitte 52, 54 der Taschen 50 und die Oberfläche 34a der Rückseite 34 der Dichtlippe 28 fließend ineinander über. Zur Realisierung der Rückförderwirkung gemäß dem in den Fign. 3 und 4 gezeigten Prinzip ist erforderlich, dass die Schnittkontur der welligen strukturierten Rückseite 34 der Dichtlippe 28 die gemäß Fig. 3 durch die Winkel α, β gekennzeichnete Schrägstellung der Seitenwandabschnitte 52, 54 relativ zur Umfangsrichtung der Rotationsdichtung 24 aufweist. Die Seitenwandabschnitte 52, 54 der Taschen 50 müssen dabei nicht linear verlaufend ausgeführt sein, sondern können auch zumindest abschnittsweise gekrümmt sein. In den Fign. 20 ist die Änderung der Schnittkontur der Rückseite 34 der Dichtlippe 28 veranschaulicht. Die beiden axial versetzten Querschnitte L-L und K-K gemäß Fig. 20A zeigen verschiedene Schnittkonturen (Fig. 20B). Die gestrichelte Linie entspricht dabei dem Querschnitt K-K, die durchgezogene Linie dem Querschnitt L-L. Die Winkel α, β und damit die Rückförderrichtung der Rotationsdichtung 24 haben den gleichen Richtungssinn wie bei der Rotationsdichtung 24 gemäß den Figuren 2 und 3.

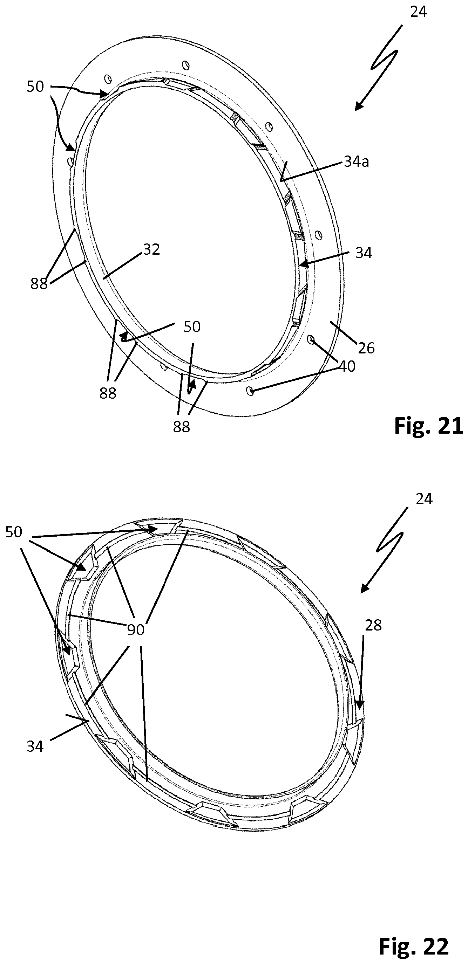

Für die Rückförderfunktion der Rotationsdichtung 24 kann die Dichtlippe 28 gemäß des in **Fig. 21** dargestellten Ausführungsbeispiels an ihrer Rückseite 34 auch zusätzliche, bevorzugt steg- oder rippenartige, Erhebungen **88** aufweisen, durch die die Seitenwandabschnitte 52, 54 der Taschen 50 der Dichtlippe 28 über die Kontur der taschenfreien Umfangssegmente 58 der Dichtlippe 28 hervorstehen. Dadurch kann die Kontaktpressung p der Dichtlippe 28 in den zu den Seitenwandabschnitten 52, 54 (Fig. 2) korrespondierenden Bereichen ihrer Vorderseite 32 weiter verstärkt werden.

**Fig. 22** zeigt eine spezielle Ausführungsform einer - hier rein beispielhaft axial dichtenden - Rotationsdichtung 10, bei der die an der Rückseite 34 der Dichtlippe 28 angeordneten Taschen 50 zusätzlich über nut- oder kerbförmige Kanäle **90** miteinander fluidisch verbunden sind. In gleicher Weise kann auch eine radial dichtende Rotationsdichtung 10, d. h. ein Radialwellendichtring, wie dieser beispielhaft in Fig. 2 gezeigt ist, mit derlei Kanälen 90 versehen sein.

Die für den hier vorgestellten Rückfördermechanismus erforderliche Oberflächenstrukturierung 48 der Rückseite 34 der Dichtlippe 28 der Rotationsdichtung kann im Wege verschiedener Fertigungsverfahren erzeugt werden. Hierzu zählen insbesondere Prägeverfahren, eine Lasermaterialbearbeitung, zerspanende Verfahren, insbesondere Fräsen, sowie additive Fertigungsverfahren oder auch Spritzgussverfahren.

Die vorstehend im Zusammenhang mit den Figuren 1 bis 22 erläuterten Rotationsdichtungen 24 weisen die rückseitige Oberflächenstrukturierung 48 der Dichtlippe 28 bereits im nicht-montierten Zustand auf.

## Patentansprüche

1. Rotationsdichtungsanordnung (10) mit Rückförderfunktion, umfassend:
- ein erstes und ein zweites Maschinenelement (12, 14), die unter Ausbildung eines Dichtspalts (16) voneinander beabstandet und um eine Rotationsachse (18) relativ zueinander bewegbar angeordnet sind, wobei das erste Maschinenelement (12) eine Dichtungshaltestruktur und das zweite Maschinenelement (14) eine Dichtfläche (22) aufweist;
- eine Rotationsdichtung (24) zum Abdichten einer mit einem Fluid druckbeaufschlagbaren Hochdruckseite H gegenüber einer Niederdruckseite N des Dichtspalts (16), wobei die Rotationsdichtung (24) an der Dichtungshaltestruktur des ersten Maschinenelements (12) gehalten angeordnet ist und eine Dichtlippe (28) aufweist, die mit ihrer der Dichtfläche (22) zuweisenden Vorderseite (32) zumindest abschnittsweise an der Dichtfläche (22) des zweiten Maschinenelements (14) vorgespannt dynamisch dichtend anliegt,
**dadurch gekennzeichnet, dass**
die Dichtlippe (28) an ihrer von der Dichtfläche (22) wegweisenden Rückseite (34) Taschen (50) aufweist oder an ihrer der Hochdruckseite H zuweisenden Stirnseite (86) Taschen (50) aufweist, die sowohl von der Rückseite (34) als auch von der Vorderseite (32) der Dichtlippe (28) beabstandet angeordnet sind,
wobei die Dichtlippe (28) bei rückseitig angeordneten Taschen (50) durch einen elastisch verformbaren Vorspannring (44), der die Dichtlippe (28) an ihrer Rückseite (34) umlaufend umgreift, und bei stirnseitig angeordneten Taschen (50) durch ein dem Material der Rotationsdichtung innewohnendes elastisches Rückstellvermögen gegen die Dichtfläche (22) gespannt ist, wobei die Taschen (50) in Umfangsrichtung der Rotationsdichtung (24) voneinander beabstandet angeordnet und in Umfangsrichtung jeweils durch einen Seitenwandabschnitt (52, 54) der Dichtlippe (28) seitlich begrenzt sind, der relativ zur Umfangsrichtung der Dichtlippe (28) zumindest abschnittsweise unter einem spitzen Winkel α zur Hochdruckseite H hin derart schräg verlaufend angeordnet ist, dass die Dichtlippe (28) in Umfangsrichtung der Rotationsdichtung mit einem Kontaktpressungsverlauf an der Dichtfläche (22) anliegt, durch den bei einer Relativbewegung der beiden Maschinenteile (12, 14) eine zur Hochdruckseite H gerichtete Rückförderung von zwischen die Dichtlippe (28) und die Dichtfläche (22) gelangtem Fluid bewirkt ist.

2. Rotationsdichtungsanordnung nach Anspruch 1, **dadurch gekennzeichnet, dass** die Taschen (50) in Umfangsrichtung beiderseitig jeweils durch einen Seitenwandabschnitt (52, 54) der Dichtlippe (28) seitlich begrenzt sind, die relativ zur Umfangsrichtung der Dichtlippe (28) zumindest abschnittsweise unter einem spitzen Winkel α, β schräg verlaufend angeordnet sind und die zur Hochdruckseite H hin divergieren.

3. Rotationsdichtungsanordnung nach Anspruch 2, **dadurch gekennzeichnet, dass** die Dichtlippe (28) an ihrer Rückseite, vorzugsweise rippen- oder stegartige, Erhebungen (88) aufweist, durch die die Seitenwandabschnitte (52, 54) der Taschen (50) über die Kontur der Rückseite (34) der Dichtlippe (28) hinaus erhöht sind.

4. Rotationsdichtungsanordnung nach Anspruch 2, **dadurch gekennzeichnet, dass** die Seitenwandabschnitte (52, 54) der Taschen (50) mit der Rückseite (34) der Dichtlippe (28) über eine Kante (56) verbunden sind oder dass die Seitenwandabschnitte (52, 54) und die Rückseite (34) fließend ineinander übergehen.

5. Rotationsdichtungsanordnung nach einem der vorhergehenden Ansprüche, **dadurch gekennzeichnet, dass** der elastisch verformbare Vorspannring (44) an der Rückseite (34) der Dichtlippe (28), insbesondere auch im Bereich der Taschen (50) der Dichtlippe (28), vollumfänglich anliegt.

6. Rotationsdichtungsanordnung nach Anspruch 1, **dadurch gekennzeichnet, dass** die Dichtlippe (28) mit den stirnseitig angeordneten Taschen (50) mit einem statischen Dichtabschnitt (84) am ersten Maschinenteil (12) statisch dichtend anliegt.

7. Rotationsdichtungsanordnung nach einem der vorhergehenden Ansprüche, **dadurch gekennzeichnet, dass** die Dichtlippe (28) der Rotationsdichtung (24) eine dynamische Dichtkante (30) aufweist.

8. Rotationsdichtungsanordnung nach Anspruch 1, **dadurch gekennzeichnet, dass** die stirnseitigen Taschen (50) der Dichtlippe (28) der Rotationsdichtung (24) im Querschnitt rechteckig oder oval ausgeformt sind.

9. Rotationsdichtungsanordnung nach Anspruch 1, **dadurch gekennzeichnet, dass** die an der Rückseite (34) der Dichtlippe (28) angeordneten Taschen (50) über, bevorzugt nutförmige, Kanäle (90) der Dichtlippe (28) miteinander fluidisch verbunden sind.

10. Rotationsdichtungsanordnung nach einem der vorhergehenden Ansprüche, **dadurch gekennzeichnet, dass** die Rotationsdichtung (24) bezogen auf die Rotationsachse (18) in axialer oder in radialer Richtung dynamisch dichtend ist.

11. Rotationsdichtungsanordnung nach Anspruch 10, **dadurch gekennzeichnet, dass** die Rotationsdichtung (24) in radialer Richtung dynamisch innendichtend oder außendichtend ausgeführt ist.

12. Rotationsdichtungsanordnung nach einem der vorhergehenden Ansprüche, **dadurch gekennzeichnet, dass** die Rotationsdichtung (24) aus einem zäh-oder gummielastisch verformbaren Material, insbesondere Polytetrafluorethylen oder einem Polytetrafluorethylen-Compound, besteht.

13. Rotationsdichtungsanordnung Anspruch 1, **dadurch gekennzeichnet, dass** der Vorspannring (44) als ein Elastomer- oder als ein Gummiring ausgeführt ist.

14. Rotationsdichtungsanordnung nach Anspruch 1, **dadurch gekennzeichnet, dass** die Rotationsdichtung (24) zwei Dichtlippen (28) aufweist, die sich vom Halteabschnitt (26) der Rotationsdichtung (24) in einander entgegengesetzte Richtungen wegerstrecken.

15. Rotationsdichtungsanordnung nach Anspruch 1, **dadurch gekennzeichnet, dass** die Rotationsdichtungsanordnung (10) eine weitere Rotationsdichtung (24) umfasst.

## Claims

1. Rotary seal arrangement (10) having a recirculation function, comprising:
- a first and a second machine element (12, 14), spaced apart to form a sealing gap (16) and movable relative to each other about a rotation axis (18), the first machine element (12) comprising a seal-holding structure and the second machine element (14) a sealing surface (22);
- a rotary seal (24) for sealing a high pressure side H pressurizable with a fluid against a low pressure side N of the sealing gap (16), the rotary seal (24) being held on the seal-holding structure of the first machine element (12) and having a sealing lip (28), the front side (32) of which faces the sealing surface (22) and abuts at least in sections in a dynamically sealing manner against the sealing surface (22) of the second machine element (14),
**characterized in that**
the sealing lip (28) has pockets (50) on its rear side (34) pointing away from the sealing surface (22) or on its end face (86) facing the high-pressure side H, which are arranged spaced apart both from the rear side (34) and the front side (32) of the sealing lip (28),
wherein the sealing lip (28) in case of rear side arranged pockets (50) is tensioned against the sealing surface (22) by an elastically deformable pretensioning ring (44) surrounding the sealing lip (28) on its rear side (34) circumferentially, and in case of frontally arranged pockets (50), by a resilience inherent in the material of the rotary seal,
wherein the pockets (50) arranged in the circumferential direction of the rotary seal (24) are spaced apart from each other and laterally limited in the circumferential direction by a side wall portion (52, 54) of the sealing lip (28), which is arranged relative to the circumferential direction of the sealing lip (28) at least partially under an acute angle α obliquely to the high pressure side H, so that the sealing lip (28) in the circumferential direction of the rotary seal abuts the sealing surface (22) with a contact pressure profile, through which upon a relative movement of the two machine parts (12, 14) a recirculation directed to the high pressure side H of fluid passed between the sealing lip (28) and the sealing surface (22) is effected.

2. Rotary seal arrangement according to claim 1, **characterized in that** the pockets (50) are laterally limited in the circumferential direction on both sides by a side wall portion (52, 54) of the sealing lip (28), which side wall portions are, relative to the circumferential direction of the sealing lip (28), at least partially arranged obliquely at an acute angle α, β and diverge out to the high pressure side H.

3. Rotary seal arrangement according to claim 2, **characterized in that** the sealing lip (28) comprises on its rear side, preferably rib-like or web-like, elevations (88) through which the side wall portions (52, 54) of the pockets (50) are elevated above the contour of the rear side (34) of the sealing lip (28).

4. Rotary seal arrangement according to claim 2, **characterized in that** the side wall portions (52, 54) of the pockets (50) are connected to the rear side (34) of the sealing lip (28) via an edge (56) or that the side wall portions (52, 54) and the rear side (34) flow smoothly into each other.

5. Rotary seal arrangement according to one of the preceding claims, **characterized in that** the elastically deformable pretensioning ring (44) over its entire circumference rests on the rear side (34) of the sealing lip (28), in particular also in the region of the pockets (50) of the sealing lip (28).

6. Rotary seal arrangement according to claim 1, **characterized in that** the sealing lip (28) with the frontally arranged pockets (50) statically sealing abuts the first machine part (12) with a statically sealing portion (84).

7. Rotary seal arrangement according to one of the preceding claims, **characterized in that** the sealing lip (28) of the rotary seal (24) has a dynamic sealing edge (30).

8. Rotary seal arrangement according to claim 1, **characterized in that** the endface pockets (50) of the sealing lip (28) of the rotary seal (24) are rectangular or oval in cross-section.

9. Rotary seal arrangement according to claim 1, **characterized in that** pockets (50) arranged on the rear side (34) of the sealing lip (28) are fluidly connected to each other by way of, preferably groove-shaped, channels (90) of the sealing lip (28).

10. Rotary seal arrangement according to one of the preceding claims, **characterized in that** the rotary seal (24) is dynamically sealing in the axial or in the radial direction with respect to the axis of rotation (18).

11. Rotary seal arrangement according to claim 10, **characterized in that** the rotary seal (24) is designed to be dynamically internally sealing or externally sealing in the radial direction.

12. Rotary seal arrangement according to one of the preceding claims, **characterized in that** the rotary seal (24) consists of a viscoelastically or rubber-elastically deformable material, in particular polytetrafluoroethylene or a polytetrafluoroethylene compound.

13. Rotary seal arrangement according to claim 1, **characterized in that** the pretensioning ring (44) is designed as an elastomer or as a rubber ring.

14. Rotary seal arrangement according to claim 1, **characterized in that** the rotary seal (24) comprises two sealing lips (28) extending away from the holding section (26) of the rotary seal (24) in opposite directions.

15. Rotary seal arrangement according to claim 1, **characterized in that** the rotary seal arrangement (10) comprises a further rotary seal (24).

## Revendications

1. Agencement de garniture d'étanchéité rotative (10) avec fonction de refoulement, comportant :
- un premier et un deuxième élément de machine (12, 14), qui sont espacés l'un de l'autre de manière à former une fente d'étanchéité (16) et sont disposés de manière mobile l'un par rapport à l'autre autour d'un axe de rotation (18), le premier élément de machine (12) comprenant une structure de maintien de garniture d'étanchéité et le deuxième élément de machine (14) comprenant une surface étanchéité (22) ;
- une garniture d'étanchéité rotative (24) servant à rendre étanche un côté haute pression H pouvant être sollicité en pression par un fluide par rapport à un côté basse pression N de la fente d'étanchéité (16), la garniture d'étanchéité rotative (24) étant disposée de manière maintenue sur la structure de maintien de garniture d'étanchéité du premier élément de machine (12) et comprenant une lèvre d'étanchéité (28) qui s'appuie de manière dynamiquement étanche et précontrainte contre la surface d'étanchéité (22) du deuxième élément de machine (14) au moins dans certaines parties par son côté avant (32) tourné vers la surface d'étanchéité (22),
**caractérisé en ce que**
la lèvre d'étanchéité (28) comprend, sur son côté arrière (34) opposé à la surface étanchéité (22), des cavités (50) ou comprend, sur son côté frontal (86) tourné vers le côté haute pression H, des cavités (50) qui sont disposées de manière espacée à la fois du côté arrière (34) et du côté avant (32) de la lèvre d'étanchéité (28), la lèvre d'étanchéité (28) étant serrée contre la surface d'étanchéité (22) par une bague de précontrainte (44) déformable élastiquement qui entoure la lèvre d'étanchéité (28) de manière périphérique au niveau de son côté arrière (34) lorsque les cavités (50) sont disposées du côté arrière, et par une capacité de rappel élastique inhérente au matériau de la garniture d'étanchéité rotative lorsque les cavités (50) sont disposées du côté frontal,
les cavités (50) étant disposées de manière espacée les unes des autres dans la direction périphérique de la garniture d'étanchéité rotative (24) et étant limitées dans la direction périphérique latéralement respectivement par une partie de paroi latérale (52, 54) de la lèvre d'étanchéité (28) qui est disposée de manière à s'étendre de façon inclinée par rapport à la direction périphérique de la lèvre d'étanchéité (28) au moins dans certaines parties suivant un angle aigu α vers le côté haute pression H, de telle sorte que la lèvre d'étanchéité (28) s'appuie contre la surface étanchéité (22) avec un profil de pression de contact dans la direction périphérique de la garniture d'étanchéité rotative, profil par le biais duquel, en cas de mouvement relatif des deux parties de machine (12, 14), un refoulement, orienté vers le côté haute pression H, de fluide parvenu entre la lèvre d'étanchéité (28) et la surface étanchéité (22) est produit.

2. Agencement de garniture d'étanchéité rotative selon la revendication 1, **caractérisé en ce que** les cavités (50) sont limitées latéralement dans la direction périphérique des deux côtés respectivement par une partie de paroi latérale (52, 54) de la lèvre d'étanchéité (28), lesquelles parties de paroi latérale sont disposées de manière à s'étendre de façon inclinée au moins dans certaines parties suivant un angle aigu α, β par rapport à la direction périphérique de la lèvre d'étanchéité (28) et lesquelles divergent vers le côté haute pression H.

3. Agencement de garniture d'étanchéité rotative selon la revendication 2, **caractérisé en ce que** la lèvre d'étanchéité (28) comprend, sur son côté arrière, des rehaussements (88) de préférence de type ailettes ou nervures, par lesquels les parties de paroi latérale (52, 54) des cavités (50) sont élevées au-delà du contour du côté arrière (34) de la lèvre d'étanchéité (28).

4. Agencement de garniture d'étanchéité rotative selon la revendication 2, **caractérisé en ce que** les parties de paroi latérale (52, 54) des cavités (50) sont reliées au côté arrière (34) de la lèvre d'étanchéité (28) par le biais d'une arête (56) ou **en ce que** les parties de paroi latérale (52, 54) et le côté arrière (34) se prolongent en douceur les uns dans les autres.

5. Agencement de garniture d'étanchéité rotative selon l'une des revendications précédentes, **caractérisé en ce que** la bague de précontrainte (44) déformable élastiquement s'appuie sur toute la périphérie contre le côté arrière (34) de la lèvre d'étanchéité (28), en particulier également dans la région des cavités (50) de la lèvre d'étanchéité (28).

6. Agencement de garniture d'étanchéité rotative selon la revendication 1, **caractérisé en ce que** la lèvre d'étanchéité (28) comportant les cavités (50) disposées du côté frontal s'appuie de manière étanche statiquement contre la première partie de machine (12) par une partie d'étanchéité statique (84).

7. Agencement de garniture d'étanchéité rotative selon l'une des revendications précédentes, **caractérisé en ce que** la lèvre d'étanchéité (28) de la garniture d'étanchéité rotative (24) comprend une arête d'étanchéité dynamique (30).

8. Agencement de garniture d'étanchéité rotative selon la revendication 1, **caractérisé en ce que** les cavités (50) frontales de la lèvre d'étanchéité (28) de la garniture d'étanchéité rotative (24) sont formées de manière rectangulaire ou ovale en section transversale.

9. Agencement de garniture d'étanchéité rotative selon la revendication 1, **caractérisé en ce que** les cavités (50) disposées sur le côté arrière (34) de la lèvre d'étanchéité (28) sont reliées les unes aux autres de manière fluidique par le biais de canaux (90), de préférence en forme de rainures, de la lèvre d'étanchéité (28) .

10. Agencement de garniture d'étanchéité rotative selon l'une des revendications précédentes, **caractérisé en ce que** la garniture d'étanchéité rotative (24) assure une étanchéité dynamique dans la direction axiale ou radiale par rapport à l'axe de rotation (18).

11. Agencement de garniture d'étanchéité rotative selon la revendication 10, **caractérisé en ce que** la garniture d'étanchéité rotative (24) est réalisée de manière à assurer l'étanchéité intérieure ou l'étanchéité extérieure dynamique dans la direction radiale.

12. Agencement de garniture d'étanchéité rotative selon l'une des revendications précédentes, **caractérisé en ce que** la garniture d'étanchéité rotative (24) est constituée d'une matière déformable de manière viscoplastique ou de manière élastique comme du caoutchouc, en particulier de polytétrafluoroéthylène ou d'un composé de polytétrafluoroéthylène.

13. Agencement de garniture d'étanchéité rotative selon la revendication 1, **caractérisé en ce que** la bague de précontrainte (44) est réalisée sous la forme d'une bague en élastomère ou d'une bague en caoutchouc.

14. Agencement de garniture d'étanchéité rotative selon la revendication 1, **caractérisé en ce que** la garniture d'étanchéité rotative (24) comprend deux lèvres d'étanchéité (28) qui s'éloignent de la partie de maintien (26) de la garniture d'étanchéité rotative (24) dans des directions opposées l'une à l'autre.

15. Agencement de garniture d'étanchéité rotative selon la revendication 1, **caractérisé en ce que** l'agencement de garniture d'étanchéité rotative (10) comporte une autre garniture d'étanchéité rotative (24).
